# EUROPEAN PATENT APPLICATION

(11) **EP 1 020 324 A1**
(43) Date of publication of application: **19.07.2000**
(21) Application number: 99203853.9
(22) Date of filing: 18.11.1999
(51) Int. Cl.: B60P 1/44

(54) **Improvements to loading flaps for lorries**

(30) Priority: 15.01.1999 BE 9900032
(71) Applicant: Dhollander, Jan Jozef Prudence, 9160 Lokeren (BE); Derie, Pol Jan Lode, 9111 Belsele (BE)
(72) Inventor: Dhollander, Jan Jozef Prudence, 9160 Lokeren (BE)
(74) Representative: Donné, Eddy

(57) **Abstract**

Improvements to loading flaps for lorries of the type which is provided with a mechanical bottom tilting which is situated near the attachment of the loading ramp to the lorry, whereby the levers (16-17) are hinge-mounted to rocker arms (11-24), whereby the rocker arm (11) can set against a fixed part (5) of the loading flap construction, characterised in that the rocker arms (11) and (24) are fixed on a common pipe (25), whereby a rod, a bar or such (26) is provided in this pipe which carries the levers (16), (17) respectively at its far end.

## Description

The present invention concerns improvements to loading flaps for lorries, in particular loading flaps with a mechanical bottom tilting.

In particular, the present invention concerns improvements to such loading flaps whereby the mechanical tilting is provided at the rear of the lifting arms, in other words near the attachment of the loading ramp to the lorry.

A disadvantage of this type of loading flaps, whereby the tilting mechanism is provided at the rear, consists in that both lifting arms are only connected to one another at the front, in other words at their free ends, by means of a cross-rod, a pipe or such, whereas they are bearing-mounted as separate at the rear by means of pens in relation to what is called the rocker arms, which are themselves hinge-mounted to the fixed part of the loading ramp which is fixed to the lorry.

This is disadvantageous in that the loading ramp can relatively easily deform crosswise, in other words diagonally to the driving direction of the lorry.

Also, the present invention concerns improvements to loading ramps of the above-mentioned type, whereby any crosswise deformations of the loading flap are practically entirely excluded.

The improvements to loading flaps for lorries according to the invention, of the type which is provided with a mechanical bottom tilting which is situated near the attachment of the loading ramp to the lorry, whereby the levers are hinge-mounted to rocker arms which can set against a fixed part of the loading flap construction, consists in that the rocker arms are fixed on a common pipe, whereby a rod, a bar or such is provided in this pipe which rigidly fastens both levers to one another at its far end.

The above-mentioned rod, bar or such can rotate or revolve in the above-mentioned pipe.

In order to better explain the characteristics of the invention, the following preferred embodiment of a loading flap onto which the above-mentioned improvements have been made is described as an example only without being limitative in any way, with reference to the accompanying drawings, in which:
figure 1 shows a view in perspective of a loading flap with a mechanical bottom tilting onto which the improvements according to the invention have been made;
figure 2 represents a side view of figure 1, whereby the loading flap is fixed on a lorry;
figure 3 shows a view which is similar to that of figure 2, but in which the actual loading flap is set slantingly;
figure 4 shows the part which is indicated by F4 in figure 2 to a larger scale;
figure 5 shows the part which is indicated by F5 in figure 3 to a larger scale;
figure 6 shows a view according to arrow F6 in figure 2;
figure 7 shows the part which is indicated by F7 in figure 6 to a larger scale.

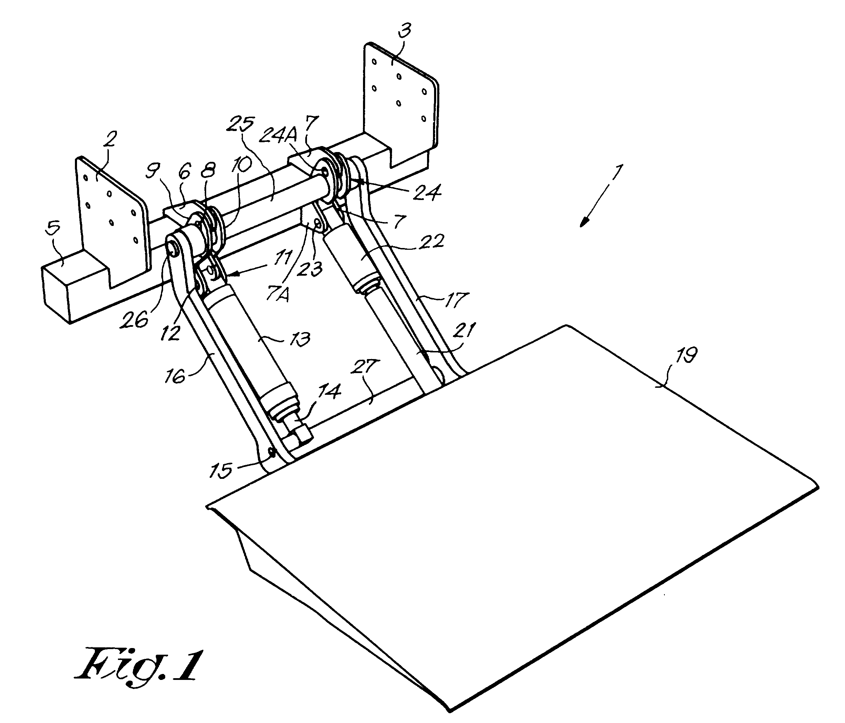

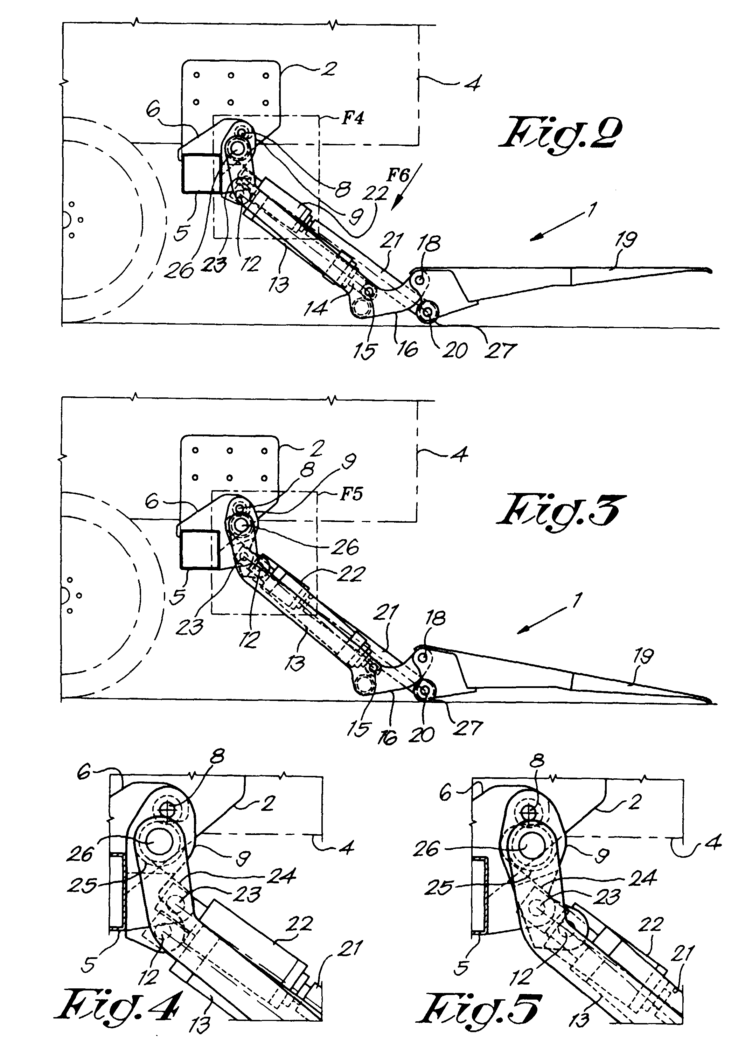

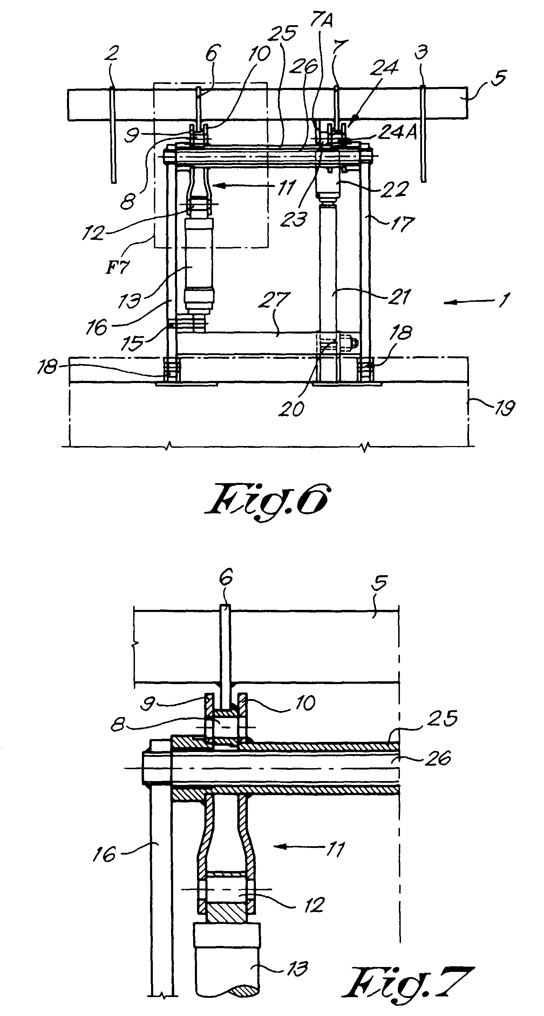

As represented in the figures, the loading flap 1 is fixed in an appropriate manner, by means of flanges 2-3, on the rear end of a lorry 4, whereby what is called the fixed part 5 of the loading flap is provided between these flanges 2 and 3.

With this fixed part are attached two flanges, 6 and 7 respectively, in which a shaft or spindle 8 is bearing-mounted which is fixed to the flanges 9 and 10 of a rocker arm 11 with its far end.

The other free end of this rocker arm 11 is provided with a spindle 12 around which, between the flanges 9 and 10, the far end of the body of a hydraulic cylinder 13 is freely hinge-mounted, whereby the far end of the piston rod 14 of the cylinder 13 is freely hinge-mounted to one of the levers 16 of the loading flap by means of a spindle 15.

The actual load platform 19 is provided freely rotatable on the arms 16-17 by means of a spindle 18, whereby said load platform 19 is further connected to the piston rod 21 of a hydraulic cylinder 22 by means of a spindle 20 and with hinges, whose body is freely provided on a shaft 23 by means of hinges in a set of fixed flanges 7 and 7A which are rigidly fastened to the part 5.

According to the invention, the above-mentioned rocker arm 11 is fixed on a pipe 25 onto which is also fixed a lever 24 which is itself fixed in an oscillating manner to the flange 7 by means of a shaft 24A, which can be compared to the above-mentioned shaft 8. The pipe 25, onto which the above-mentioned levers 11 and 24 are fixed, is provided on a rod or bar 26 in a rotating or revolving manner onto which, at each far end and past the far end concerned of the pipe 25, are fixed the respective levers 16 and 17.

Both the pipe 25 and the bar or rod 26 so to say form torsion elements which make it possible to obtain a rigid fastening between the above-mentioned rocking arms 11 and 24 on the one hand and between the levers 16 and 17 on the other hand, so that a crosswise deformation of the loading flap construction, caused by one-sided or asymmetrical loading on the platform or such, is practically entirely excluded.

A cross connection 27 is indeed provided at the bottom of the levers 16-17, whereas the pipe 25 and the rod or bar 26 are provided on top of the levers 16-17.

The actual working of the loading flap as described above is known as such and mainly consists in that the actual load platform 19 can be moved up and down in any position whatsoever by means of the lift cylinder 13, whereby the rocking arm 11 in this case sets against the fixed part 5 of the loading flap, whereas the hydraulic cylinder 22 makes sure that the load platform 19 can be put from its operating position into its closed position and vice versa.

As the levers 16 and 17 are connected to one another both at the top and at the bottom in this manner, this results in a loading flap with a very solid construction, and which is particularly resistant against crosswise deformations.

Although in the given example, only one cylinder 13 and one cylinder 22 are provided, it is clear that these cylinders 13 and 22 can also be provided in pairs.

The present invention is by no means limited to the above-described embodiment represented in the accompanying drawings; on the contrary, such a loading flap can be made in all sorts of shapes and dimensions while still remaining within the scope of the invention.

## Claims

1. Improvements to loading flaps for lorries of the type which is provided with a mechanical bottom tilting which is situated near the attachment of the loading ramp to the lorry, whereby the levers (16-17) are hinge-mounted to rocker arms (11-24), whereby the rocker arm (11) can set against a fixed part (5) of the loading flap construction, characterised in that the rocker arms (11) and (24) are fixed on a common pipe (25), whereby a rod, a bar or such (26) is provided in this pipe which carries the levers (16), (17) respectively at its far end.

2. Improvements to loading flaps for lorries according to claim 1, characterised in that the rod or bar (26) can rotate or revolve in the pipe (25).
